(19) Europäisches Patentamt European Patent Office Office européen des brevets

(11) **EP 4 481 862 A1**

(12) **EUROPEAN PATENT APPLICATION**
published in accordance with Art. 153(4) EPC

(43) Date of publication:
**25.12.2024 Bulletin 2024/52**

(21) Application number: **23756271.5**

(22) Date of filing: **09.02.2023**

(51) International Patent Classification (IPC):
**H01M 4/86** $^{(2006.01)}$   **H01M 4/96** $^{(2006.01)}$
**H01M 8/10** $^{(2016.01)}$

(52) Cooperative Patent Classification (CPC):
**H01M 4/86; H01M 4/96; H01M 8/10;** Y02E 60/50

(86) International application number:
**PCT/JP2023/004296**

(87) International publication number:
**WO 2023/157745 (24.08.2023 Gazette 2023/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.02.2022 JP 2022023441**

(71) Applicant: **Toray Industries, Inc.**
**Tokyo 103-8666 (JP)**

(72) Inventors:
• **SHINBA, Yoichi**
 **Otsu-shi, Shiga 520-2141 (JP)**
• **MURASUGI, Hideaki**
 **Otsu-shi, Shiga 520-2141 (JP)**
• **KATAYAMA, Yutaka**
 **Otsu-shi, Shiga 520-2141 (JP)**

(74) Representative: **Kador & Partner Part mbB**
 **Corneliusstraße 15**
 **80469 München (DE)**

(54) **GAS DIFFUSION ELECTRODE FOR FUEL CELLS**

(57) The present invention provides a gas diffusion electrode which is capable of restraining the progression of carbon corrosion at an anode gas diffusion electrode of a fuel cell even in a reverse potential state that is caused by deficiency of a fuel supplied to the anode gas diffusion electrode, and which is therefore free from a decrease in the power generation performance of the cell. This gas diffusion electrode includes a conductive porous base material that contains carbon fibers as a constituent material, and a microporous layer that is in contact with one surface of the conductive porous base material; and this gas diffusion electrode is characterized in that the microporous layer contains, as constituent materials, carbon fine particles and a fluororesin that has a fluoroalkyl chain, and if A ($m^2/g$) is the specific surface area of the carbon fine particles, B ($g/cm^3$) is the content of the carbon fine particles per unit volume in the microporous layer, and C ($g/cm^3$) is the content of the fluororesin that has a fluoroalkyl chain per unit volume in the microporous layer, the value obtained by the formula X described below is 10 to 50. (Formula X): A - 30 $\times$ (C/B).

**EP 4 481 862 A1**

**Description**

TECHNICAL FIELD

The present invention relates to a fuel cell, particularly a gas diffusion electrode to be used for a polymer electrolyte fuel cell and a fuel cell including the gas diffusion electrode.

BACKGROUND ART

A polymer electrolyte fuel cell in which a hydrogencontaining fuel gas and an oxygen-containing oxidizing gas are supplied to an anode and a cathode, respectively, and an electromotive force is generated via electrochemical reactions occurring at both the electrodes, is generally constituted of a power generation unit called a stack in which a plurality of cells are stacked in series, each of the cells being constituted by laminating in order a bipolar plate, a gas diffusion electrode substrate, a catalyst layer, an electrolyte membrane, a catalyst layer, a gas diffusion electrode, and a bipolar plate. Here, the three-layer portion composed of one of the catalyst layers, the electrolyte membrane, and the other catalyst layer is referred to as a catalyst coated membrane (CCM), and the five layer portion including the gas diffusion electrodes disposed on both sides of the CCM is referred to as a membrane electrode assembly (MEA).

The gas diffusion electrodes are required to have high gas diffusivity for allowing a gas supplied from the bipolar plates to be diffused into the catalyst layers and high water removability for discharging water generated via the electrochemical reactions to the bipolar plates, as well as high electrical conductivity for extracting generated electric current. For this reason, gas diffusion electrodes in which an electrically conductive porous substrate (hereinafter, sometimes simply referred to as "substrate") made of electrically conductive fibers such as carbon fibers is used and a microporous layer (MPL) is formed on the surface thereof are widely used (Patent Documents 1 to 3).

In the operation of a normal fuel cell, the following reaction proceeds on the anode side.

$$H_2 \rightarrow 2H^+ + 2e^- \qquad (1)$$

In addition, the following reaction proceeds on the cathode side.

$$O_2 + 4H^+ + 4e^- \rightarrow 2H_2O \qquad (2).$$

Here, a part of the water generated on the cathode side permeates the electrolyte membrane and moves to the anode side, and the humidity on the anode side may be increased. At the time of starting at a low temperature or the like, water droplets may condense and deposit on the anode side to close bipolar plate flow channels, thereby hindering supply of hydrogen. At this time, this cell falls into a fuel starved state, and becomes unable to continue power generation. However, since the other cells in the stack except for that cell continue power generation, a large voltage is applied to both poles of the fuel starved cell connected in series among these power generation cells as a load of the fuel cell. Since a voltage polarity opposite to that during normal power generation is applied to both poles of the fuel starved cell that has become unable to generate power in this manner, this is usually called a cell reversal (CR) state, and at this time, the following two types of reactions occur on the anode side of this cell in order to supply electrons.

$$2H_2O \rightarrow O_2 + 4H^+ + 4e^- \qquad (3)$$

$$C + 2H_2O \rightarrow CO_2 + 4H^+ + 4e^- \qquad (4).$$

Here, the reaction (3) is a water electrolysis reaction, and the reaction (4) is an electrochemical corrosion reaction of carbon. In particular, the reaction (4) consumes catalyst support carbon, which is a constituent material of the anode catalyst layer, and thus causes serious performance deterioration such as catalyst desorption and an increase in contact resistance.

As a countermeasure to this, there is a method of avoiding the CR state by constantly monitoring the voltage of each cell constituting the stack and immediately performing an operation such as output control or hydrogen flow rate increase when a sign of fuel shortage is observed. However, since this method leads to an increase in cost of the fuel cell system, a material that inhibits a carbon corrosion reaction even in the CR state has been required.

In such a situation, a technique of promoting water electrolysis is adopted in order to promote the reaction (3) in the CR state. Specifically, it is known that iridium oxide or ruthenium oxide is mixed with platinum support carbon, which is an anode catalyst (Patent Document 4).

On the other hand, it is known that reaction (4) in the CR state proceeds not only in the anode catalyst layer but also in carbon on the surface of the microporous layer of the anode gas diffusion electrode in contact with the anode catalyst layer. Therefore, carbon of the anode gas diffusion electrode also disappears at the contact interface between the anode catalyst layer and the anode gas diffusion electrode, and the contact resistance at the interface increases, so that the cell performance of the fuel cell deteriorates. On the other hand, there also is a method involving mixing iridium oxide or ruthenium with the anode gas diffusion electrode similarly to the anode catalyst layer.

However, the materials used in these methods contain rare metals and thus are expensive, which undesirably leads to an increase in the cost of the fuel cell.

Furthermore, there also is a method of inhibiting deterioration by making carbon for use for a catalyst layer highly crystalline (Patent Document 5).

However, even with carbon having high crystallinity, the reaction (4) in the CR state proceeds, so that the drop of cell voltage cannot be sufficiently inhibited.

PRIOR ART DOCUMENTS

PATENT DOCUMENTS

Patent Document 1: Japanese Patent Laid-open Publication No. 2014-011163
Patent Document 2: International Publication No. 2016/076132
Patent Document 3: International Publication No. 2015/125749
Patent Document 4: Japanese Patent Laid-open No. 2020-087644
Patent Document 5: International Publication No. 2020/059501

SUMMARY OF THE INVENTION

PROBLEMS TO BE SOLVED BY THE INVENTION

The problem intended to be solved by the present invention is to provide a gas diffusion electrode with which the progression of carbon corrosion at an anode gas diffusion electrode of a fuel cell is inhibited even in a CR state that occurs due to starvation of a fuel to be supplied to the anode gas diffusion electrode and the cell performance does not deteriorate.

SOLUTIONS TO THE PROBLEMS

The present invention for solving the above problem provides the following gas diffusion electrode and fuel cell.

(1) A gas diffusion electrode including: an electrically conductive porous substrate that contains carbon fibers as a constituent material; and a microporous layer that is in contact with one surface of the electrically conductive porous substrate, in which the microporous layer contains, as constituent materials, carbon microparticles and a fluorinated resin having a fluoroalkyl chain, and when a specific surface area of the carbon microparticles is denoted by $A$ ($m^2/g$), a content of the carbon microparticles per unit volume in the microporous layer is denoted by $B$ ($g/cm^3$), and a content of the fluorinated resin having a fluoroalkyl chain per unit volume in the microporous layer is denoted by $C$ ($g/cm^3$), a value obtained by Formula X given below is 10 to 50.

$$A - 30 \times (C/B) \quad \text{(Formula X)}$$

(2) The gas diffusion electrode according to (1), in which the value of the Formula X is 10 to 28.
(3) The gas diffusion electrode according to (1) or (2), in which the value of the Formula X is 10 to 25.
(4) The gas diffusion electrode according to any one of (1) to (3), in which the carbon microparticles are non-porous carbon microparticles.
(5) The gas diffusion electrode according to any one of (1) to (4), in which the carbon microparticles have a specific surface area of 20 to 40 $m^2/g$.
(6) The gas diffusion electrode according to any one of (1) to (5), in which the fluorinated resin having a fluoroalkyl chain has a melting point of 200 to 300°C.
(7) The gas diffusion electrode according to any one of (1) to (6), in which an arithmetic mean roughness of a microporous layer-side surface of the gas diffusion electrode is 7 um or less.
(8) A fuel cell using the gas diffusion electrode according to any one of (1) to (7) as an anode-side electrode of the fuel cell.

EFFECTS OF THE INVENTION

A fuel cell in which the gas diffusion electrode of the present invention is incorporated is not deteriorated in fuel cell performance even on starting at low temperatures because carbon degradation under a CR state in a fuel starved state is suppressed. Therefore, durability during long-term traveling of an actual vehicle is improved.

EMBODIMENTS OF THE INVENTION

The gas diffusion electrode of the present invention has a configuration in which a microporous layer is formed on an electrically conductive porous substrate. First, the electrically conductive porous substrate will be described.

As the electrically conductive porous substrate in the present invention, porous media containing carbon fibers such as a carbon fiber woven fabric, a carbon fiber papermaking substrate, a carbon fiber non-woven fabric, carbon felt, carbon paper, and carbon cloth are used. Here, the carbon paper refers to a sheet formed by bonding a carbon fiber papermaking substrate with a carbonized resin. Among them, use of carbon felt, carbon paper, or carbon cloth is preferable in terms of superior corrosion resistance, and further, use of carbon paper is more preferable in terms of a property of absorbing a dimensional change in a thickness direction of an electrolyte membrane, that is, a "spring property".

Examples of the carbon fiber include polyacrylonitrile (PAN)-based, pitch-based, and rayon-based carbon fibers. Among them, PAN-based carbon fibers and pitch-based carbon fibers are preferably used because of their superior mechanical strength. In addition, natural fibers or synthetic fibers such as rayon fibers, acrylic fibers, and cellulose fibers may be mixed.

The mean diameter of monofilaments of the carbon fiber is preferably 3 to 20 um. When the mean diameter is 3 um or larger, since the pore size of the electrically conductive porous substrate is large, the water removability is improved and flooding can be inhibited. Meanwhile, when the mean diameter is 20 um or smaller, since the water vapor diffusibility is reduced, dry-out can be inhibited. It is preferable that the mean diameter of the monofilaments of the carbon fiber is 5 to 10 um because those effects are enhanced.

The mean length of the monofilaments of the carbon fiber is preferably 3 to 20 mm. When the mean length is 3 mm or longer, the electrically conductive porous substrate has good mechanical strength, electrical conductivity and thermal conductivity. Meanwhile, when the mean length is 20 mm or shorter, good carbon fiber dispersibility is attained at the time of papermaking, and a homogeneous electrically conductive porous substrate is obtained. It is preferable that the mean length of the monofilaments of the carbon fiber is 5 to 15 mm because those effects are enhanced.

The mass per unit area (areal weight) of the electrically conductive porous substrate is preferably 20 to 50 $g/m^2$. When the areal weight is 20 $g/m^2$ or more, the mechanical strength and electrical conductivity of the electrically conductive porous substrate are improved. Meanwhile, when the areal weight is 50 $g/m^2$ or less, the gas diffusivity of the electrically conductive porous substrate in the through-plane direction (hereinafter, the through-plane direction means a thickness direction) is improved, and the fuel cell performance is improved. It is preferable that the areal weight of the electrically conductive porous substrate is 30 to 40 $g/m^2$ because those effects are enhanced.

The areal weight of the electrically conductive porous substrate can be adjusted by controlling the amount of carbon fiber, carbonized resin, or the like, which is a constituent material of the electrically conductive porous substrate.

As the electrically conductive porous substrate, a substrate subjected to a hydrophobic treatment is preferably used. The hydrophobic treatment is preferably performed using a hydrophobic polymer such as a fluorinated resin having a fluoroalkyl chain. Examples of the fluorinated resin include polytetrafluoroethylene (PTFE), a tetrafluoroethylene-hexafluoropropylene copolymer (FEP), a tetrafluoroethylene-perfluoroalkyl vinyl ether copolymer (PFA), a tetrafluoroethylene-ethylene copolymer (ETFE), polyvinylidene fluoride (PVDF), and polyvinyl fluoride (PVF), and PTFE or FEP, which exhibits high hydrophobicity, is preferable.

The amount of the hydrophobic polymer is not particularly limited, and preferably 0.1 to 20 parts by mass with respect to 100 parts by mass of the entire electrically conductive porous substrate. Within this range, the hydrophobicity is sufficiently exhibited, whereas it is possible to inhibit the hydrophobic polymer from clogging pores serving as diffusion paths or electrical resistance from increasing. As a method for subjecting the electrically conductive porous substrate to the hydrophobic treatment, in addition to a method of dipping an electrically conductive porous substrate in a dispersion of a hydrophobic polymer, a method of coating an electrically conductive porous substrate with a hydrophobic polymer by die coating, spray coating, or the like can also be applied. In addition, processing by a dry process such as sputtering of a fluorinated resin can also be applied. After the hydrophobic treatment, a drying step and a heating step for wet-spreading the hydrophobic polymer in the substrate may be added, as necessary.

In a polymer electrolyte fuel cell, the gas diffusion electrode is required to have high gas diffusivity for diffusing a gas supplied from a bipolar plate to a catalyst layer and high water removability for discharging water generated by an electrochemical reaction to the bipolar plate. For this purpose, the electrically conductive porous substrate preferably has a peak of a pore size at 10 to 100 um. The pore size and the distribution thereof can be determined by a pore size distribution measurement with a mercury porosimeter. In order to determine the pore size of the electrically conductive porous substrate, only the electrically conductive porous substrate may be measured or the gas diffusion electrode after formation of a microporous layer may be measured. In a case where the gas diffusion electrode is measured, each layer structure is confirmed by scanning electron microscopy (SEM) observation of a through-plane cross section (cross section parallel to the thickness direction) of the gas diffusion electrode, and a size of a pore portion of the electrically conductive porous substrate is approximately determined based on an SEM image. Subsequently, a pore size of the electrically conductive porous substrate is determined while associating the peaks of a plurality of pore sizes determined using a mercury porosimeter with an approximate value obtained by the SEM image.

In the present invention, the porosity of the electrically conductive porous substrate is preferably 80 to 95%. When the porosity is 80% or more, gas diffusivity is enhanced, and fuel cell performance is improved. Meanwhile, when the porosity is 95% or less, the mechanical strength of the electrically conductive porous substrate is enhanced, and the electrical conductivity is also improved. It is preferable that the porosity of the electrically conductive porous substrate is 85 to 90% because those effects are enhanced. The porosity of the electrically conductive porous substrate can be measured using a pycnometer or the like.

The thickness of the electrically conductive porous substrate of the present invention is preferably 90 to 180 um. Here, the thickness of the electrically conductive porous substrate is a thickness when both surfaces are sandwiched with a pressure of 0.15 MPa. When the thickness is 90 um or more, mechanical strength is maintained, and handling in a manufacturing process is easy. In addition, since the spring property is enhanced and the gas diffusion electrode can absorb dimensional changes due to expansion and shrinkage of the electrolyte membrane during use of the fuel cell, and since the gas diffusivity in the in-plane direction is improved, the fuel cell performance is improved. Meanwhile, when the thickness of the electrically conductive porous substrate is 180 um or less, the gas diffusivity in the through-plane direction is enhanced, and the electrically conductive path in the through-plane direction is shortened and the electrical conductivity is improved, so that the fuel cell performance is improved. It is preferable that the thickness of the electrically conductive porous substrate is 110 to 150 um because those effects are enhanced.

The microporous layer will now be described. In the present invention, there is a microporous layer in contact with one surface of the electrically conductive porous substrate, and examples of the role of the microporous layer include water management such as moisture retention of the electrolyte membrane and discharge of generated water, reduction of electrical resistance at an interface between the catalyst layer and the gas diffusion electrode, and inhibition of breakage of the electrolyte membrane due to carbon fibers protruding from the electrically conductive porous substrate.

The microporous layer is a layer containing carbon microparticles and a fluorinated resin having a fluoroalkyl chain.

In the microporous layer of the present invention, the value of A - 30 × (C/B) is 10 to 50 where the specific surface area of the carbon microparticles is A ($m^2$/g), and the content of the carbon microparticles and the content of the fluorinated resin having a fluoroalkyl chain per unit volume in the microporous layer are B ($g/cm^3$) and C ($g/cm^3$), respectively. The value is preferably 10 to 28, and more preferably 10 to 25. Hereinafter, the calculation formula "A - 30 × (C/B)" is referred to as Formula X.

$$A - 30 \times (C/B) \quad (Formula\ X)$$

As described above, in the cell reversal (CR) state, the electrochemical corrosion reaction of carbon of the anode gas diffusion electrode represented by reaction (4) proceeds. Here, the reaction most preferentially occurs in carbon near the catalyst layer. In the gas diffusion electrode, since the microporous layer is in contact with the catalyst layer, carbon present in the microporous layer, that is, carbon microparticles are corroded preferentially.

The present inventors have found that how much the surfaces of the carbon microparticles present in the microporous layer is covered with the fluorinated resin having a fluoroalkyl chain affects the corrosion reaction of the carbon microparticles in the CR state, and have found that the formula X is an index representing the covered state of the carbon microparticles with the fluorinated resin having a fluoroalkyl chain.

When the value of Formula X is 10 or more, the amount of the fluorinated resin having a fluoroalkyl chain is not excessively large, so that the electrical resistance of the gas diffusion electrode is kept low. Meanwhile, when the value of Formula X is 50 or less, the fluorinated resin having a fluoroalkyl chain covers the surfaces of the carbon microparticles, and deterioration of the carbon microparticles is inhibited even in the CR state, so that deterioration of the fuel cell performance is inhibited. It is more preferable that the value of Formula X is 28 or less because those effects are enhanced, and it is still more preferable that the value of Formula X is 25 or less.

In addition, when porous carbon microparticles with pores formed inside the carbon microparticles are used, it becomes difficult for the fluorinated resin having a fluoroalkyl chain to permeate pores of the carbon microparticles and sufficiently cover the surfaces of the carbon microparticles. It, therefore, is preferable that the carbon microparticles are non-porous carbon microparticles with no pores formed inside.

The specific surface area of the carbon microparticles can be measured by a BET method (JIS Z 830, ISO 9277) utilizing adsorption of nitrogen gas. Examples of the specific surface area by the BET method of commercially available non-porous carbon microparticles include: #3030B: 29 $m^2$/g, #3050B: 50 $m^2$/g, and #3230B: 200 $m^2$/g (manufactured by Mitsubishi Chemical Corporation), "TOKABLACK (registered trademark)" #5500: 225 $m^2$/g, "TOKABLACK (registered trademark)" #4400: 50 $m^2$/g, and "TOKABLACK (registered trademark)" #3800: 27 $m^2$/g (manufactured by Tokai Carbon Co., Ltd.), "Vulcan (registered trademark)" 9A32: 140 $m^2$/g, "Vulcan (registered trademark)" XC-72: 232 $m^2$/g, and "FCX (registered trademark)" 80: 77 $m^2$/g (manufactured by Cabot Corporation), "DENKA BLACK (registered trademark)" Granular: 68 $m^2$/g, "DENKA BLACK (registered trademark)" FX35: 133 $m^2$/g, and "DENKA BLACK (registered trademark)" HS-100: 39 $m^2$/g (manufactured by Denka Co., Ltd.). Examples of the specific surface area by the BET method of commercially available porous carbon microparticles include: "Blackpearls (registered trademark)" 2000: 1475 $m^2$/g, (manufactured by Cabot Corporation), "Ketjen Black (registered trademark)" EC300J: 800 $m^2$/g, and "Ketjen Black (registered trademark)" EC600JD: 1200 $m^2$/g (manufactured by Lion Specialty Chemicals Co., Ltd.).

Even when two or more types of carbon microparticles are used, the specific surface area can be determined by determining the total surface area and the mass of all carbon microparticles. If the surface area is known for each particle, a known value may be used, or the surface area may be measured by the BET method described above.

Specifically, carbon black, carbon nanofiber, graphene, or the like is used as the carbon microparticles. Among them, carbon black, which is inexpensive, is suitably used. In addition, carbon microparticles having an average crystal grain size increased by anneal at a high temperature in an inert gas are preferable because they are hardly oxidized.

The specific surface area of the carbon microparticles is preferably 20 to 40 $m^2$/g. When the specific surface area of the carbon microparticles is 20 $m^2$/g or more, dispersibility of the carbon microparticles in a microporous layer ink is improved, so that a uniform microporous layer can be formed. In addition, the moisture retaining property and the water removability of the microporous layer are enhanced, so that the fuel cell performance is improved. When the specific surface area of the carbon microparticles is 40 $m^2$/g or less, the carbon corrosion reaction of the gas diffusion electrode in the CR state is inhibited.

The contents of the fluorinated resin having a fluoroalkyl chain and the carbon microparticles per unit volume in the microporous layer can be measured by mass spectrometry. First, the content of the fluorinated resin having a fluoroalkyl chain in the microporous layer is determined by degassing component analysis when the microporous layer is heated to 1000°C in a He atmosphere to decompose and remove the resin component. Next, the content of the carbon microparticles can be measured from the mass of the residue of the heat decomposition treatment. The contents per unit volume can be determined by dividing these measurements by the volume of the microporous layer. In addition, the specific surface area of the carbon microparticles can be determined by analyzing the residue by the BET method.

In addition, since fibrous non-porous carbon microparticles such as carbon nanofibers form electrically conductive paths inside the microporous layer, the fibrous non-porous carbon microparticles have an effect of reducing the electrical resistance of the microporous layer.

Similarly to the fluorinated resin having a fluoroalkyl chain to be used suitably when subjecting the electrically conductive porous substrate to hydrophobic treatment, examples of the fluorinated resin having a fluoroalkyl chain contained in the microporous layer include polytetrafluoroethylene (PTFE; melting point: 327°C), a tetrafluoroethylene-hexafluoropropylene copolymer (FEP; melting point: 260°C), a tetrafluoroethylene-perfluoroalkyl vinyl ether copolymer (PFA; melting point: 305°C), a tetrafluoroethylene-ethylene copolymer (ETFE; melting point: 265°C), polyvinylidene fluoride (PVDF; melting point: 177°C), and polyvinyl fluoride (PVF; melting point: 190°C).

The melting point of the fluorinated resin having a fluoroalkyl chain is preferably 200 to 300°C. When the melting point of the fluorinated resin having a fluoroalkyl chain is 200°C or higher, migration of the fluorinated resin having a fluoroalkyl chain together with the solvent in a drying step after coating with the microporous layer is inhibited, and the fluorinated resin having a fluoroalkyl chain can be uniformly present inside the microporous layer. When the fluorinated resin having a fluoroalkyl chain has a melting point of 300°C or lower, the fluorinated resin having a fluoroalkyl chain is rapidly melted and wet-spread in the microporous layer at the time of heat treatment after coating with and drying the microporous layer, so that hydrophobicity of the microporous layer is improved. It is preferable that the melting point of the fluorinated resin having a fluoroalkyl chain is 230 to 270°C because those effects are enhanced. The melting point of the fluorinated resin having a fluoroalkyl chain can be determined by measuring the temperature at the time of melting when the temperature of the substance is gradually increased. For example, the melting point can be determined by measuring a temperature at which an endothermic peak appears when the temperature is raised from room temperature to 400°C at 10°C/min in a nitrogen atmosphere using a differential scanning calorimeter.

Since a fluorinated resin having a fluoroalkyl chain is generally insoluble in water, an organic solvent, or the like, it is preferable to use a dispersion of the fluorinated resin having a fluoroalkyl chain having been processed into microparticles when producing an ink for forming a microporous layer. Examples of the dispersion of the fluorinated resin having a fluoroalkyl chain in a microparticle form include "POLYFLON (registered trademark)" D-210C, ND-110 (manufactured by Daikin Industries, Ltd.), 120-JRB, and 31-JR (manufactured by Chemours-Mitsui Fluoroproducts Co., Ltd.).

In addition to the fluorinated resin having a fluoroalkyl chain, the microporous layer of the present invention may contain a hydrophobic polymer such as a fluorinated resin having no fluoroalkyl chain or a silicone resin having a siloxane linkage. Furthermore, a thermosetting resin may be contained. Examples of the thermosetting resin include a phenolic resin, an epoxy resin, an acrylate resin, and a furan resin.

Furthermore, the microporous layer may contain microparticles of iridium oxide, ruthenium oxide, titanium oxide, or the like, which promote water electrolysis in a cell reversal (CR) state at the time of hydrogen deficiency. In addition, the microporous layer may contain microparticles of cerium oxide, manganese oxide or the like for inactivating hydroxide radicals generated at the anode electrode.

The areal weight of the microporous layer of the present invention is preferably 10 to 35 g/m$^2$. It is preferable that the areal weight of the microporous layer is 10 g/m$^2$ or more because carbon fibers protruding from the surface of the electrically conductive porous substrate are covered, so that the carbon fibers can be inhibited from damaging the electrolyte membrane. In addition, it is preferable because contact resistance between the gas diffusion electrode and the catalyst layer can be reduced, and drying of the electrolyte membrane can be prevented. It is preferable that the areal weight of the microporous layer is 35 g/m$^2$ or less because the water removability is improved. It is preferable that the areal weight of the microporous layer is 15 to 25 g/m$^2$ because those effects are enhanced.

The surface of the microporous layer of the present invention preferably has irregularities, cracks, pinholes, and the like as few as possible. When the number of these defects is small and the surface is smooth, not only the durability of the microporous layer is improved, but also the electrical resistance and thermal resistance at the interface between the microporous layer and the catalyst coated membrane are lowered. In addition, the frequency with which the carbon microparticles in the microporous layer come into contact with water is reduced, so that the progress of the corrosion reaction of the carbon microparticles is inhibited. The arithmetic mean roughness (Ra), which is an index of the smoothness of the surface of the microporous layer, is preferably 7 um or less. Ra can be measured using a laser microscope. For example, the irregularity profile over a length of 5 mm at an arbitrary position on the surface is measured using a laser microscope "VK-X3000" (manufactured by KEYENCE CORPORATION), and the average value of the measurement can be calculated as Ra. Meanwhile, it is preferable that Ra is 1 um or more because the generated water is easily captured in recesses present on the surface of the microporous layer, so that the interface of the catalyst layer in contact with the surface of the microporous layer is moisturized and catalytic activity is enhanced.

The thickness of the gas diffusion electrode of the present invention is preferably 90 to 200 um. Here, the thickness of the gas diffusion electrode is a thickness when both surfaces are sandwiched with a pressure of 0.15 MPa. When the thickness of the gas diffusion electrode is 90 um or more, mechanical strength is maintained, and handling in a manufacturing process is easy. Meanwhile, when the thickness of the gas diffusion electrode is 200 um or less, gas diffusivity is enhanced, and electrical resistance is reduced, so that cell performance of the fuel cell is improved. It is preferable that the thickness of the gas diffusion electrode is 110 to 170 um because those effects are enhanced. The thickness of the gas diffusion electrode can be adjusted by appropriately adjusting the thickness of each of the electrically conductive porous substrate and the microporous layer.

Next, one example of a method of producing the gas diffusion electrode of the present invention is described in detail.

First, a carbon fiber bundle cut into a prescribed length is loosened in water to yield a carbon fiber dispersion in which carbon fibers are uniformly dispersed, and then the carbon fiber dispersion is made into a paper sheet and dried to yield a carbon fiber papermaking substrate. Here, a surfactant, a thickener, and a defoamer may be contained in the dispersion of carbon fibers, or a water-soluble resin may be contained so that the form of the carbon fiber papermaking substrate can be maintained. As the water-soluble resin, polyvinyl alcohol, polyvinyl acetate, or the like is used.

When papermaking is performed continuously, carbon fibers can be oriented in the longitudinal direction by increasing the speed of a wire mesh of papermaking, and the elastic modulus in the carbon fiber orientation direction is increased. When the gas diffusion electrode is disposed such that the carbon fiber orientation direction of the gas diffusion electrode and bipolar plate flow channels are orthogonal to each other at the time of preparing the fuel cell, the gas diffusion electrode is prevented from being pushed into grooves of the flow channels, so that the water removability can be improved.

The carbon fiber papermaking substrate obtained as described above may be used as the electrically conductive porous substrate of the present invention, but in order to improve mechanical strength and reduce electrical resistance, it is preferable to bond intersections between carbon fibers with a carbonized resin.

For this purpose, for example, a method can be applied in which a carbon fiber papermaking substrate is impregnated with a resin composition solution and then heat-treated to carbonize the resin component in the resin composition.

Examples of the resin to be used for the resin composition solution includes thermosetting resins such as a phenolic resin, an epoxy resin, a melamine resin, and a furan resin. The resin composition solution may contain a carbon powder, a surfactant, or the like in addition to the resin component and the solvent. Examples of the carbon powder include carbon black, graphite, carbon nanotubes, and carbon nanofibers.

Examples of the method for the impregnation with the resin composition solution include dipping, spraying, blade coating, die coating, and a transfer method. By adjusting the impregnation method, an inclination distribution of the amount of the resin composition in the thickness direction in the substrate may be provided.

Next, the substrate impregnated with the resin composition solution is dried at a temperature of 80°C to 150°C in the air. Subsequently, the thermosetting resin is cured and the surfactant and the like are decomposed and removed by heating at a temperature of 200°C to 300°C in the air. At this time, the substrate may be improved in flatness and adjusted in thickness by pressurizing both surfaces of the substrate with flat plates.

Furthermore, in order to enhance the electrical conductivity of the substrate and enhance the long-term durability, it is preferable to carbonize the cured resin composition at a temperature of 1000°C to 2400°C in an inert atmosphere such as nitrogen. Here, it is preferable that a pre-carbonization treatment is performed at a temperature of 300°C to 1000°C in an inert atmosphere before the carbonization treatment to decompose and remove impurities and bring the residue close to a crystal structure of graphite because the crystallinity during the carbonization treatment is enhanced and the above-mentioned performance is enhanced.

The substrate thus obtained can have sufficient electrical conductivity as an electrically conductive porous substrate of a gas diffusion electrode of a fuel cell.

Further, a hydrophobic treatment may be performed in order to enhance the water removability of the electrically conductive porous substrate. In the hydrophobic treatment, the substrate is dipped in a liquid containing a hydrophobic polymer, then dried, and subjected to heat treatment for wetting and spreading the hydrophobic polymer inside the substrate as appropriate, thereby affording an electrically conductive porous substrate in which the hydrophobic polymer adheres to the inside thereof. As the hydrophobic resin, the same resin as the fluorinated resin contained in the microporous layer may be used. In addition, a liquid obtained by diluting a dispersion of a hydrophobic polymer in a microparticle form to a prescribed concentration may also be used as the liquid containing a hydrophobic polymer.

In this way, the electrically conductive porous substrate of the present invention can be obtained.

Next, a method for forming a microporous layer on the electrically conductive porous substrate will be described.

The microporous layer can be formed by coating the electrically conductive porous substrate with an ink in which carbon microparticles and a fluorinated resin having a fluoroalkyl chain are dispersed in a solvent such as water and subjecting the ink-coated substrate to a heat treatment. Here, it is necessary to determine the composition ratio of the carbon microparticles and the fluorinated resin having a fluoroalkyl chain such that the value of Formula X is 10 to 50.

When the ink for forming the microporous layer is prepared, it is preferable to add a dispersant, a thickener, or the like to the liquid because the dispersion stability of the carbon microparticles or the fluorinated resin having a fluoroalkyl chain is enhanced. As the dispersant, a nonionic surfactant is preferable because of its small content of metal components, and in particular, polyoxyalkylene aryl ether-based "Triton (registered trademark)" X-100 (manufactured by NACALAI TESQUE, INC.) or the like, which increases the dispersion stability of the ink and affords of a microporous layer with improved surface smoothness, is preferable. In addition, it is effective to add a thickener in order to keep the viscosity of the ink high. As the thickener, for example, a methyl cellulose-based thickener, a polyethylene glycol-based thickener, a polyvinyl alcohol-based thickener, and the like are preferably used.

For the dispersant and the thickener, a single substance having two functions may be used, or materials suitable for the respective functions may be selected. When the thickener and the dispersant are individually selected, it is preferable to select a thickener that does not impair the dispersibility of the carbon microparticles and the dispersibility of the fluorinated resin having a fluoroalkyl chain.

Furthermore, microparticles for promoting water electrolysis such as iridium oxide, ruthenium oxide, or titanium oxide, microparticles for inactivating radicals such as cerium oxide or manganese oxide, or the like are also added, as necessary.

The mixture described above is kneaded using a homogenizer, a planetary mixer, an ultrasonic disperser, or the like to afford an ink for forming a microporous layer.

The coating of the electrically conductive porous substrate with the ink for forming a microporous layer can be performed using various commercially available coating devices. As a coating method, screen printing, rotary screen printing, intaglio printing, gravure printing, spray coating, die coating, bar coating, blade coating, roll knife coating, and the like can be used.

After the electrically conductive porous substrate is coated with the microporous layer, the ink is dried at a temperature of 60°C to 150°C, and then heated at a temperature of 250°C to 380°C to promote decomposition and removal of additives such as the dispersant and the thickener and melting of the fluorinated resin having a fluoroalkyl chain. At this time, the fluorinated resin having a fluoroalkyl chain in the microporous layer but also the hydrophobic polymer attached to the electrically conductive porous substrate as well melt and spread on the surfaces of carbon fibers, carbonized resin, carbon microparticles, and the like, which are other constituent materials. As a result, the water removability of the electrically conductive porous substrate and the microporous layer is enhanced, so that the performance of the fuel cell using them is improved.

In this way, a gas diffusion electrode in which the microporous layer is formed on the electrically conductive porous substrate is obtained.

The gas diffusion electrode of the present invention is particularly preferably used as an anode electrode. The microporous layer-side surface of the gas diffusion electrode of the present invention and one side surface of an electrolyte membrane having a catalyst layer on both surfaces (CCM) are joined, and the other side surface of the CCM is joined to a microporous layer-side surface of a separately prepared cathode gas diffusion electrode, and thus a membrane electrode assembly (MEA) is prepared. Here, the gas diffusion electrode of the present invention may be used also as the cathode gas diffusion electrode.

Further, the resulting MEA is sandwiched between two bipolar plates provided with gas flow channels for an anode and a cathode from both sides to prepare a fuel cell. At this time, in the case where the MEA is designed to have a size slightly smaller than the outer peripheries of the two bipolar plates and a gasket has been disposed to surround the MEA, the MEA is fixed in a state of being compressed to an appropriate thickness when the MEA is sandwiched by being pressurized by the bipolar plates. Since the thickness of the MEA in a power generation cell can be controlled by adjusting the thickness of the gasket, the best performance can be acquired in accordance with the purpose of power generation.

The flow channels of the bipolar plates are provided with an inlet/outlet for supplying hydrogen on the anode side and an inlet/outlet for supplying air on the cathode side. In addition, since the bipolar plates are made of an electrically conductive material such as stainless steel or carbon, connecting electric wires thereto makes it possible to take electricity in and out. Further, providing the inside of the bipolar plates with a passage through which circulating water can be supplied makes it possible to hold the cell at a prescribed temperature.

When about 200 to 500 fuel cell sets thus manufactured are prepared and there are connecting in series, a high voltage such as 40 kV to 200 kV can be generated. Such a fuel cell stack can be used as a power source of a fuel cell vehicle or the like.

EXAMPLES

Hereinafter, the present invention will be concretely described by way of examples thereof. The methods for preparing the materials used in Examples and the methods for evaluation of the battery performance of a fuel cell will be described below.

<Method for producing electrically conductive porous substrate>

A polyacrylonitrile carbon fiber "TORAYCA (registered trademark)" T300 (average fiber diameter: 7 um) manufactured by Toray Industries, Inc. was cut into a length of 12 mm, dispersed in water, and subjected to continuous papermaking. Furthermore, the resulting paper was coated with a 10% by mass aqueous solution of polyvinyl alcohol by spray coating, and dried, affording a continuous papermaking substrate formed of a carbon fiber and having an areal weight of 20 g/m$^2$. An amount of the polyvinyl alcohol adhered was 20 parts by mass with respect to 100 parts by mass of the papermaking substrate.

Next, a resin composition solution in which flake graphite (average particle size: 5 pm), a phenolic resin (a mixture of a resol type phenolic resin and a novolak type phenolic resin at a mass ratio of 1 : 1), and methanol were mixed at a mass ratio of 5 : 10 : 85 was prepared. Then, the carbon fiber papermaking substrate was continuously coated with the resin composition solution by spray coating such that the total amount of the phenolic resin and the flake graphite was 130 parts by mass with respect to 100 parts by mass of the carbon fibers in the substrate, and dried at 100°C for 5 minutes.

Subsequently, the substrate to which the resin composition was adhered was sandwiched between upper and lower hot platens by a press forming machine, and then subjected to a heat-compression treatment at 180°C for 5 minutes. At that time, a release paper was placed between the substrate and each of the hot platens so that the hot platens and the substrate were prevented from adhering to each other. In addition, spacers were disposed at the peripheral portions of the upper and lower hot platens to adjust the thickness of the substrate after the heat compression. Thereafter, carbonization was performed by heating at 2400°C in a nitrogen atmosphere in a heating furnace.

Further, a hydrophobic polymer dispersion prepared by mixing 5 parts by mass of a dispersion of PTFE microparticles ("POLYFLON (registered trademark)" D-210C manufactured by Daikin Industries, Ltd.) and 95 parts by mass of ion-exchanged water was applied by spray coating, and then dried at 100°C for 5 minutes, affording an electrically conductive porous substrate having a thickness of 150 um at 0.15 MPa and an areal weight of 40 g/m$^2$.

<Method for measuring arithmetic mean roughness of surface of gas diffusion electrode>

The arithmetic mean roughness (Ra) over a length of 5 mm of the microporous layer-side surface of a gas diffusion electrode was measured using a laser microscope "VK-X3000" (manufactured by KEYENCE CORPORATION). Ra was measured at arbitrary four points on a 30 mm × 30 mm test piece, and an average value of the measurements was calculated.

<Evaluation of fuel cell performance>

A prescribed gas diffusion electrode prepared in each of Examples and Comparative Examples was put on each of the anode side and the cathode side of an electrolyte membrane/catalyst integrated product [a product in which a catalyst layer "PRIMEA (registered trademark)" manufactured by W. L. Gore & Associates G. K. were formed on both surfaces of an electrolyte membrane "GORE-SELECT (registered trademark)" manufactured by W. L. Gore & Associates G. K.] in such a manner that a microporous layer was in contact with a catalyst layer. Then, heat pressing was performed with a pressure of 0.1 MPa at 130°C for 20 minutes, and a membrane electrode assembly (MEA) was thereby prepared. This MEA was incorporated into a unit cell for a fuel cell, hydrogen was supplied to the anode side and air was supplied to the cathode side at a cell temperature of 70°C, and a power generation state was maintained at a current density of 1 A/cm$^2$ for 3 hours. At this time, the fuel utilization efficiency and the air utilization efficiency were set to 70% and 40%, respectively, and the hydrogen on the anode side and the air on the cathode side were introduced into the cell while being humidified to have dew points of 59°C (relative humidity: 60%) and 60°C, respectively. The voltage value at the lapse of 3 hours was read as a power generation voltage and used as an index of fuel cell performance.

<Cell reversal tolerance (CRT)>

After the <Evaluation of fuel cell performance> described above was performed, the anode side was switched from hydrogen to nitrogen. A low electric current of 200 mA/cm$^2$ was applied with a potentiostat so as to flow from the anode side toward the cathode side, the cell was brought into a cell reversal state, and the cell voltage was measured. The retention time from the start of the application to a time when the cell voltage became lower than -1.5 V was defined as a CRT time.

<Carbon microparticles for microporous layer used in Examples>

Carbon microparticles A: "TOKABLACK (registered trademark)" #3800 (manufactured by Tokai Carbon Co., Ltd.); specific surface area: 27 m$^2$/g)
Carbon microparticles B: "TOKABLACK (registered trademark)" #4400 (manufactured by Tokai Carbon Co., Ltd.); specific surface area: 50 m$^2$/g)
Carbon microparticles C: "DENKA BLACK (registered trademark)" HS-100 (manufactured by Denka Co., Ltd.; specific surface area: 39 m$^2$/g)
Carbon microparticles D: "DENKA BLACK (registered trademark)" Powder (manufactured by Denka Co., Ltd.; specific surface area: 68 m$^2$/g)
Carbon microparticles E: "Vulcan (registered trademark)" 9A32 (manufactured by Cabot Corporation: specific surface area: 140 m$^2$/g)
Carbon microparticles F: "Vulcan (registered trademark)" XC-72 (manufactured by Cabot Corporation: specific surface area: 232 m$^2$/g).

(Example 1)

Using carbon microparticles A as the carbon microparticles, and also using PTFE as the fluorinated polymer having a fluoroalkyl chain, polyoxyalkylene aryl ether-based "Triton (registered trademark)" X-100 (manufactured by NACALAI TESQUE, INC.) as the dispersant, and water as the dispersion medium, an ink for forming a microporous layer was prepared such that the blending ratio was adjusted to carbon microparticles/fluorinated polymer having a fluoroalkyl chain/dispersant = 75 parts by mass/25 parts by mass/150 parts by mass and the amount of the non-decomposed components (the carbon microparticles and the fluorinated resin having a fluoroalkyl chain) was adjusted to 23% by mass with respect to the total amount. Here, a dispersion "POLYFLON (registered trademark)" D-210C (manufactured by Daikin Industries, Ltd.) in which PTFE particles were dispersed in water was used as a source of PTFE. In the preparation of the ink, raw materials were dispersed using a planetary mixer such that the composition of the ink was uniform. At this time, the value of Formula X was calculated to be 17.

$$A - 30 \times (C/B) \quad \text{(Formula X)}.$$

The electrically conductive porous substrate produced as described in <Method for producing electrically conductive porous substrate> was coated with the ink for forming a microporous layer by using a die coater, dried at 100°C for 10 minutes, and then heated at 350°C for 10 minutes. Adhesion between the fluorinated resin having a fluoroalkyl chain and the carbon microparticles was thereby promoted, and the dispersant and the like were decomposed and removed, and thus a gas diffusion electrode was prepared. Here, the coating amount was adjusted such that the areal weight of the microporous layer after heating was 20 g/cm$^2$. It is noted that the fluorinated resin having a fluoroalkyl chain is not decomposed by heating at 350°C for 10 minutes.

The arithmetic mean roughness of the surface of the microporous layer of the gas diffusion electrode obtained was 6 um.

Subsequently, the gas diffusion electrode obtained was used for both anode and cathode, and the fuel cell performance was evaluated. As a result, the cell performance was 0.58 V. In addition, CRT evaluation revealed that the retention time was 50 hours.

(Examples 2 to 14, Comparative Examples 1 to 6)

An ink for forming a microporous layer was prepared in the same manner as in Example 1 except that the type and the number of parts by mass of each component were changed as shown in Tables 1 to 3, and was applied onto an electrically conductive porous substrate, affording a gas diffusion electrode. In Examples 11 to 14 and Comparative Examples 5 to 6, a dispersion "POLYFLON (registered trademark)" ND-110 (manufactured by Daikin Industries, Ltd.) in which FEP particles were dispersed in water was used as a source of FEP. Using the gas diffusion electrodes obtained, fuel cell performance evaluation and CRT evaluation were carried out. The results are shown in Tables 1 to 3. Comparative Example 2 was conducted with reference to Example 1 of Patent Document 1. In addition, Comparative Example 3 was conducted with reference to Example 1 of Patent Document 2, Comparative Example 4 was conducted with reference to Comparative Example 1 of Patent Document 3.

[Table 1]

| | | | Example 1 | Example 2 | Example 3 | Example 4 | Example 5 | Example 6 | Example 7 |
|---|---|---|---|---|---|---|---|---|---|
| Composition of microporous layer | Carbon microparticles | Type | A | A | B | B | C | C | C |
| | | Specific surface area ($m^2$/g) | 27 | 27 | 50 | 50 | 39 | 39 | 39 |
| | | Content (parts by mass) | 75 | 90 | 50 | 75 | 60 | 73 | 75 |
| | Fluorinated resin having fluoroalkyl chain | Type | PTFE | PTFE | PTFE | PTFE | PTFE | PTFE | PTFE |
| | | Content (parts by mass) | 25 | 10 | 50 | 25 | 40 | 27 | 25 |
| | Parts by mass of dispersant | | 150 | 180 | 100 | 150 | 120 | 146 | 150 |
| | Value of Formula X | | 17 | 24 | 20 | 40 | 19 | 28 | 29 |
| Evaluation results | Arithmetic mean roughness ($\mu$m) | | 6 | 7 | 5 | 6 | 6 | 6 | 6 |
| | Fuel cell performance (V) | | 0.58 | 0.60 | 0.61 | 0.60 | 0.58 | 0.60 | 0.60 |
| | CRT (h) | | 50 | 48 | 46 | 38 | 48 | 44 | 42 |

[Table 2]

| | | | Example 8 | Example 9 | Example 10 | Example 11 | Example 12 | Example 13 | Example 14 |
|---|---|---|---|---|---|---|---|---|---|
| Composition of microporous layer | Carbon microparticles | Type | D | D | E | A | A | D | D |
| | | Specific surface area (m$^2$/g) | 68 | 68 | 140 | 27 | 27 | 68 | 68 |
| | | Content (parts by mass) | 40 | 50 | 25 | 75 | 90 | 35 | 60 |
| | Fluorinated resin having fluoroalkyl chain | Type | PTFE | PTFE | PTFE | FEP | FEP | FEP | FEP |
| | | Content (parts by mass) | 60 | 50 | 75 | 25 | 10 | 65 | 40 |
| | Parts by mass of dispersant | | 80 | 100 | 50 | 150 | 180 | 70 | 120 |
| | Value of Formula X | | 23 | 38 | 50 | 17 | 24 | 12 | 48 |
| Evaluation results | Arithmetic mean roughness ($\mu$m) | | 5 | 5 | 7 | 6 | 6 | 5 | 5 |
| | Fuel cell performance (V) | | 0.62 | 0.62 | 0.61 | 0.57 | 0.58 | 0.60 | 0.61 |
| | CRT (h) | | 45 | 39 | 31 | 56 | 55 | 52 | 40 |

[Table 3]

| | | | Comparative Example 1 | Comparative Example 2 | Comparative Example 3 | Comparative Example 4 | Comparative Example 5 | Comparative Example 6 |
|---|---|---|---|---|---|---|---|---|
| Composition of microporous layer | Carbon microparticles | Type | A | F | D | D | D | E |
| | | Specific surface area (m$^2$/g) | 27 | 232 | 68 | 68 | 68 | 140 |
| | | Content (parts by mass) | 60 | 94 | 75 | 79 | 75 | 50 |
| | Fluorinated resin having fluoroalkyl chain | Type | PTFE | PTFE | PTFE | PTFE | FEP | FEP |
| | | Content (parts by mass) | 40 | 6 | 25 | 21 | 25 | 50 |
| | Parts by mass of dispersant | | 120 | 188 | 150 | 158 | 150 | 100 |
| | Value of Formula X | | 7 | 230 | 58 | 60 | 58 | 110 |
| Evaluation results | Arithmetic mean roughness (μm) | | 6 | 8 | 6 | 7 | 6 | 8 |
| | Fuel cell performance (V) | | 0.53 | 0.62 | 0.62 | 0.62 | 0.62 | 0.62 |
| | CRT (h) | | 44 | 15 | 27 | 26 | 30 | 20 |

EP 4 481 862 A1

(Example 15)

Using carbon microparticles C as the carbon microparticles, and also using PTFE as the fluorinated resin having a fluoroalkyl chain, polyoxyalkylene alkyl ether-based "EMULGEN" 430 (manufactured by Kao Corporation) as the dispersant A, "UNILUBE (registered trademark)" 70DP-950B (manufactured by NOF Corporation) as the dispersant B, and water as the dispersion medium, an ink for forming a microporous layer was prepared such that the blending ratio was adjusted to carbon microparticles/PTFE/dispersant A/dispersant B = 100 parts by mass/45 parts by mass/90 parts by mass/90 parts by mass, and the amount of the non-decomposed components (carbon microparticles and fluorinated resin having a fluoroalkyl chain) was adjusted to 23% with respect to the total amount. Here, a dispersion "POLYFLON (registered trademark)" D-210C (manufactured by Daikin Industries, Ltd.) in which PTFE particles were dispersed in water was used as a source of PTFE. In the preparation of the ink, raw materials were dispersed using a planetary mixer such that the composition of the ink was uniform. At this time, the value of Formula X was calculated to be 26.

$$A - 30 \times (C/B) \quad (Formula\ X).$$

The electrically conductive porous substrate produced as described in <Method for producing electrically conductive porous substrate> was coated with the ink for forming a microporous layer by using a die coater, dried at 100°C for 10 minutes, and then heated at 350°C for 10 minutes. Adhesion between the fluorinated resin having a fluoroalkyl chain and the carbon microparticles was thereby promoted, and the dispersant and the like were decomposed and removed, and thus a gas diffusion electrode was prepared. Here, the coating amount was adjusted such that the areal weight of the microporous layer after heating was 20 g/cm$^2$. It is noted that the fluorinated resin having a fluoroalkyl chain is not decomposed by heating at 350°C for 10 minutes.

The arithmetic mean roughness of the surface of the microporous layer of the gas diffusion electrode obtained was 8 um.

Subsequently, the gas diffusion electrode obtained was used for both anode and cathode, and the fuel cell performance was evaluated. As a result, the cell performance was 0.60 V. In addition, CRT evaluation revealed that the retention time was 38 hours.

## Claims

1.  A gas diffusion electrode comprising:

    an electrically conductive porous substrate that contains carbon fibers as a constituent material; and
    a microporous layer that is in contact with one surface of the electrically conductive porous substrate, wherein the microporous layer contains, as constituent materials, carbon microparticles and a fluorinated resin having a fluoroalkyl chain, and when a specific surface area of the carbon microparticles is denoted by A (m$^2$/g), a content of the carbon microparticles per unit volume in the microporous layer is denoted by B (g/cm$^3$), and a content of the fluorinated resin having a fluoroalkyl chain per unit volume in the microporous layer is denoted by C (g/cm$^3$), a value obtained by Formula X given below is 10 to 50,

    $$(Formula\ X):\ A - 30 \times (C/B).$$

2.  The gas diffusion electrode according to claim 1, wherein the value of the Formula X is 10 to 28.

3.  The gas diffusion electrode according to claim 1, wherein the value of the Formula X is 10 to 25.

4.  The gas diffusion electrode according to claim 1 or 3, wherein the carbon microparticles are non-porous carbon microparticles.

5.  The gas diffusion electrode according to claim 1 or 3, wherein the carbon microparticles have a specific surface area of 20 to 40 m$^2$/g.

6.  The gas diffusion electrode according to claim 1 or 3, wherein the fluorinated resin having a fluoroalkyl chain has a melting point of 200 to 300°C.

7.  The gas diffusion electrode according to claim 1 or 3, wherein an arithmetic mean roughness of a microporous layer-side surface of the gas diffusion electrode is 7 um or less.

8. A fuel cell using the gas diffusion electrode according to claim 1 or 3 as an anode-side electrode of the fuel cell.

| | INTERNATIONAL SEARCH REPORT | International application No. |
|---|---|---|
| | | **PCT/JP2023/004296** |

**A.   CLASSIFICATION OF SUBJECT MATTER**

*H01M 4/86*(2006.01)i; *H01M 4/96*(2006.01)i; *H01M 8/10*(2016.01)i
FI:   H01M4/86 B; H01M4/86 H; H01M4/86 M; H01M4/96 M; H01M8/10 101

According to International Patent Classification (IPC) or to both national classification and IPC

**B.   FIELDS SEARCHED**

Minimum documentation searched (classification system followed by classification symbols)

H01M4/86; H01M4/96; H01M8/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X | WO 2017/047515 A1 (TORAY INDUSTRIES, INC.) 23 March 2017 (2017-03-23) paragraphs [0073]-[0082], [0088]-[0094], [0098] | 1, 4, 6-8 |
| A | | 2-3, 5 |
| X | JP 2020-61328 A (TOYOTA MOTOR CORP) 16 April 2020 (2020-04-16) paragraphs [0027]-[0037], [0039] | 1, 4-6, 8 |
| A | | 2-3, 7 |
| A | JP 2006-4879 A (NISSAN MOTOR CO LTD) 05 January 2006 (2006-01-05) | 1-8 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 April 2023** | **18 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br><b>PCT/JP2023/004296</b></td></tr>
</table>

| Patent document cited in search report | Publication date (day/month/year) | Patent family member(s) | Publication date (day/month/year) |
|---|---|---|---|
| WO 2017/047515 A1 | 23 March 2017 | US 2018/0248197 A1 paragraphs [0081]-[0103], [0114]-[0122], [0126]<br>EP 3352269 A1<br>CA 2995058 A1<br>CN 107925093 A<br>KR 10-2018-0053680 A<br>TW 201721946 A | |
| JP 2020-61328 A | 16 April 2020 | (Family: none) | |
| JP 2006-4879 A | 05 January 2006 | US 2008/0299430 A1<br>WO 2005/124903 A1<br>EP 1775788 A1<br>CA 2571753 A1<br>CA 2767154 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014011163 A
- WO 2016076132 A
- WO 2015125749 A
- JP 2020087644 A
- WO 2020059501 A